# EUROPEAN PATENT SPECIFICATION

(11) **EP 4 354 617 B1**
(45) Date of publication and mention of the grant of the patent: **18.02.2026**
(21) Application number: 22838063.0
(22) Date of filing: 08.07.2022
(51) Int. Cl.: H01M 10/625, H01M 50/20, H01M 50/209, H01M 50/233, H01M 50/249, H01M 50/342, H01M 50/383, H01M 50/375

(54) **BATTERY MODULE WITH REINFORCED SAFETY**
BATTERIEMODUL MIT VERSTÄRKTER SICHERHEIT
MODULE DE BATTERIE À SÉCURITÉ RENFORCÉE

(30) Priority: 09.07.2021 KR 20210090553
(43) Date of publication of application: 17.04.2024
(73) Proprietor: LG Energy Solution, Ltd., Seoul 07335 (KR)
(72) Inventor: LEE, Jung-Hoon, Daejeon 34122 (KR); JUNG, Hye-Mi, Daejeon 34122 (KR)
(74) Representative: Goddar, Heinz J.
(86) International application number: PCT/KR2022/009997
(87) International publication number: WO 2023/282712

(56) References cited:
- EP-A1- 2 410 592
- CN-A- 112 582 744
- CN-A- 112 838 333
- CN-A- 112 838 333
- DE-A1- 102014 206 868
- JP-A- 2006 128 043
- KR-A- 20170 030 954
- KR-B1- 101 191 657

## Description

### TECHNICAL FIELD

The present application claims priority to Korean Patent Application No. 10-2021-0090553 filed on July 9, 2021 in the Republic of Korea.

The present disclosure relates to a battery, and more particularly, to a battery module with reinforced safety, and a battery pack and a vehicle including the battery same.

### BACKGROUND ART

As the demand for portable electronic products such as notebook computers, video cameras and portable telephones is rapidly increasing and robots and electric vehicles are commercialized in earnest, high-performance secondary batteries capable of repeated charging and discharging are being actively researched.

Currently commercialized secondary batteries include nickel cadmium battery, nickel hydrogen battery, nickel zinc battery, lithium secondary battery, and so on. Among these, the lithium secondary battery has almost no memory effect to ensure free charge and discharge, compared to the nickel-based secondary battery, and the lithium secondary battery is spotlighted due to a very low discharge rate and a high energy density.

The lithium secondary battery mainly uses a lithium-based oxides and a carbon material as a positive electrode active material and a negative electrode active material, respectively. The lithium secondary battery includes an electrode assembly in which a positive electrode plate and a negative electrode plate respectively coated with the positive electrode active material and the negative electrode active material are disposed with a separator being interposed therebetween, and an exterior, or a battery case, for hermetically accommodating the electrode assembly together with an electrolyte.

Generally, the lithium secondary batteries may be classified into a can-type secondary battery having an electrode assembly included in a metal can and a pouch-type secondary battery having an electrode assembly included in a pouch of an aluminum laminate sheet, depending on the shape of the exterior.

Recently, secondary batteries are widely used for driving or energy storage not only in small devices such as portable electronic devices but also in medium and large devices such as electric vehicles and energy storage systems (ESS). These secondary batteries may constitute one battery module in such a form that a plurality of secondary batteries are electrically connected and are stored together in a module case. In addition, a plurality of battery modules may be connected to form one battery pack.

However, when a plurality of secondary batteries (battery cells) or a plurality of battery modules are concentrated in a narrow space as described above, they may be vulnerable to a thermal event. In particular, when an event such as thermal runaway occurs inside any one of the battery modules, a high-temperature gas, flame, or heat may be generated. If the gas, flame, and heat are not properly controlled, fire or explosion may occur in the corresponding battery module, and also fire or explosion may occur in other battery modules. In addition, in a medium-sized or large-sized battery pack mounted in an electric vehicle or the like, a large number of battery cells and battery modules may be included to increase output and/or capacity. Moreover, a person such as a driver may exist in the vicinity of the battery pack mounted in an electric vehicle or the like. Therefore, if a thermal event generated in a specific battery module is not properly controlled and a chain reaction such as thermal propagation occurs, it may cause not only great property damage but also personal injury.
a battery housing for energy storage devices, particularly LiFePO₄-based batteries, in which the cells are embedded in a porous, thermally insulating, and mechanically protective polyethylene foam structure enclosed in a rigid carbon-fiber-reinforced plastic frame. a battery housing for energy storage devices, particularly LiFePO₄-based batteries, in which the cells are embedded in a porous, thermally insulating, and mechanically protective polyethylene foam structure enclosed in a rigid carbon-fiber-reinforced plastic frame

DE102014206868A1 or CN 112 838 333 A disclose a battery structure in which multiple pole core groups are arranged side by side and connected in series within a shared shell and cover plate, enhancing voltage integration.

The document EP 2 410 592 A1 discloses a battery module housing with a vent opening sealed by a gas-permeable but liquid-blocking porous film, rupturable under high pressure.

### DISCLOSURE

### Technical Problem

The present disclosure is designed to solve the problems of the related art, and therefore the present disclosure is directed to providing a battery module with an improved structure to improve safety when a thermal event occurs inside the battery module, and a battery pack and a vehicle including the battery module.

However, the technical problem to be solved by the present disclosure is not limited to the above, and other problems not mentioned herein will be clearly understood by those skilled in the art from the following disclosure.

### Technical Solution

In one aspect of the present disclosure, there is provided a battery module, comprising: a cell assembly having at least one battery cell; and a module case configured to have a top plate, a base plate and a side plate to define an inner space and to accommodate the cell assembly in the inner space, the top plate being configured to at least partially have high expansibility compared to at least one of the base plate and the side plate.

Here, the top plate may be configured to at least partially have a low elastic modulus or a high thermal expansion coefficient compared to at least one of the base plate and the side plate.

In addition, the module case may have a venting hole formed to penetrate from the inner space to the outer space.

In addition, the module case may further include a module valve provided in the venting hole and configured to be opened only when a temperature or pressure of the inner space is in a certain level or above.

In addition, the venting hole may be configured to be opened by deformation of the top plate.

In addition, the top plate may be configured to partially have different expansibility.

In addition, the top plate may be configured such that a center portion has higher expansibility than a rim portion.

In addition, the top plate may be configured to have expansibility asymmetrically.

In another aspect of the present disclosure, there is also provided a battery pack, comprising the battery module according to the present disclosure.

In still another aspect of the present disclosure, there is also provided a vehicle, comprising the battery module according to the present disclosure.

### Advantageous Effects

According to the present disclosure, when a thermal event occurs inside a specific battery module, gas and/or heat may be appropriately controlled.

In particular, according to one aspect of the present disclosure, when a high-temperature gas is generated inside the battery module, a space capable of accommodating the high-temperature gas may be secured.

Accordingly, in this case, the pressure and/or heat caused by the high-temperature gas may be buffered. Therefore, according to this aspect, the possibility of explosion of the battery module is reduced, and the temperature of the discharged gas may be lowered.

In addition, according to an aspect of the present disclosure, it is possible to effectively prevent a thermal chain reaction from occurring in peripheral battery modules by the gas or heat generated in a specific battery module.

The present disclosure may have various other effects in addition to the above, and such effects will be described in each embodiment, or any effect that can be easily inferred by those skilled in the art will not be described in detail.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an assembled perspective view schematically showing a battery module according to an embodiment of the present disclosure.
FIG. 2 is an exploded perspective view showing the battery module of FIG. 1.
FIGS. 3 and 4 are a perspective view and a cross-sectional view schematically showing that a top plate is expanded in the battery module according to an embodiment of the present disclosure.
FIG. 5 is a perspective view schematically showing a battery module according to another embodiment of the present disclosure.
FIG. 6 is a perspective view schematically showing a battery module according to still another embodiment of the present disclosure.
FIG. 7 is a perspective view schematically showing a battery module according to still another embodiment of the present disclosure.
FIG. 8 is a cross-sectional view showing the C1 portion of the top plate in FIG. 7.
FIG. 9 is a cross-sectional view schematically showing the deformed state of the top plate of FIG. 8.
FIG. 10 is a top view schematically showing a top plate included in the battery module according to still another embodiment of the present disclosure.
FIG. 11 is a top view schematically showing a top plate included in the battery module according to still another embodiment of the present disclosure.
FIG. 12 is a perspective view showing a coupled portion in a module case of a battery module according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

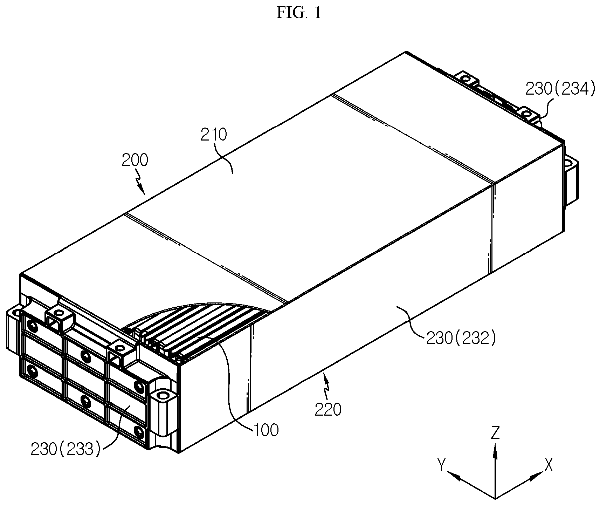

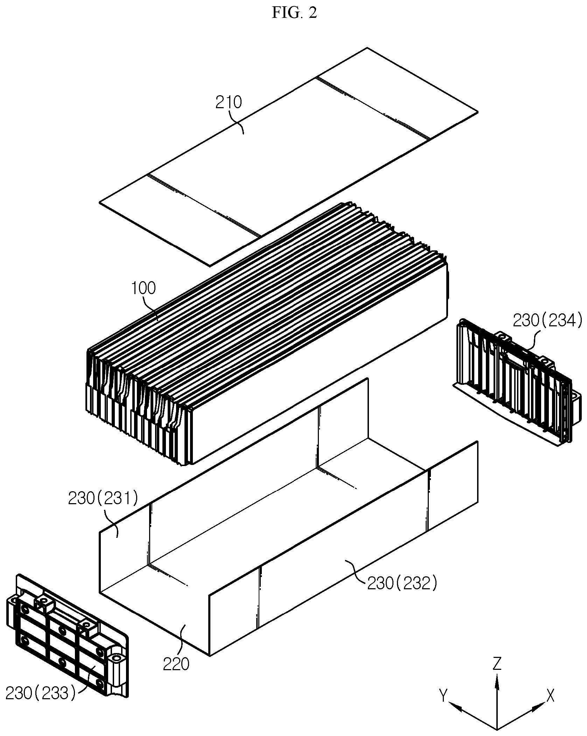

FIG. 1 is an assembled perspective view schematically showing a battery module according to an embodiment of the present disclosure, and FIG. 2 is an exploded perspective view showing the battery module of FIG. 1.

Referring to FIGS. 1 and 2, the battery module according to the present disclosure includes a cell assembly 100 and a module case 200.

The cell assembly 100 may include at least one battery cell. Here, each battery cell may refer to a secondary battery. The secondary battery may include an electrode assembly, an electrolyte and a battery case. In particular, the battery cell provided in the cell assembly 100 may be a pouch-type secondary battery. However, other types of secondary batteries, such as a cylindrical battery or a rectangular battery, may also be employed in the cell assembly 100 of the present disclosure.

A plurality of secondary batteries may form the cell assembly 100 in a stacked form. For example, the plurality of secondary batteries may be stacked so as to be arranged in a horizontal direction (Y-axis direction in the drawing) while being erect in an upper and lower direction (Z-axis direction in the drawing), respectively. Each battery cell may include electrode leads, and the electrode leads may be located at both ends or at one end of each battery cell. A secondary battery in which the electrode leads protrude in both directions may be called a bidirectional cell, and a secondary battery in which the electrode leads protrude in one direction may be called a unidirectional cell. The present disclosure is not limited by the specific type or form of these secondary batteries, and various types of secondary batteries known at the time of filing of this application may be employed in the cell assembly 100 of the present disclosure.

The module case 200 may include a top plate 210, a base plate 220 and a side plate 230, as shown in FIG. 2. In addition, the module case 200 may define an inner space by these components, namely the top plate 210, the base plate 220, and the side plate 230. The top plate 210 may be disposed at the upper portion of the module case 200, and the base plate 220 may be disposed at the lower portion of the top plate 210 to be spaced apart from the top plate 210 by a predetermined distance. In addition, the side plate 230 may be disposed between the top plate 210 and the side plate 230 to connect top ends and bottoms thereof.

The top plate 210, the base plate 220, and/or the side plate 230 may be configured in the form of a thin sheet, namely in a plate shape, but may be configured in a polyhedral shape with a thickness greater than a certain level, for example a rectangular parallelepiped shape. Moreover, the side plate 230 may include a left plate 231, a right plate 232, a front plate 233 and a rear plate 234. The top plate 210, the base plate 220 and/or the side plate 230 may be entirely or partially made of a metal material. Also, at least some of them may be made of a plastic material.

At least some of the top plate 210, the base plate 220, and the side plate 230 may be formed integrally with each other. For example, as shown in FIG. 2, among the four side plates 230, the left plate 231 and the right plate 232 may be formed integrally with the base plate 220. At this time, the left plate 231, the right plate 232 and the base plate 220, which are integrated with each other, may be referred to as U-frame due to their shape. In this case, the front plate 233 and the rear plate 234 may serve as end plates and be respectively coupled to the openings at front and rear ends of the U-frame. In addition, the top plate 210 may be coupled to the opening at the top end of the U-frame.

However, in addition to the above, the module case 200 may be configured in various other forms. For example, the base plate 220 and the four side plates 230 may form a lower case in an integrated shape, namely in a box shape. In this case, the top plate 210 may be coupled to the opening at the top end of the box-shaped lower case.

Meanwhile, various coupling methods may be employed to couple the module case 200 in the battery module assembling process, rather than the case where the module case 200 is manufactured in an integrated form. For example, the top plate 210, the front plate 233, and the rear plate 234 may be coupled with the U-frame through laser welding or ultrasonic welding. Alternatively, the components of the module case 200 may be coupled to each other through a bolt fastening method or the like.

The module case 200 may accommodate the cell assembly 100 in the inner space defined by the top plate 210, the base plate 220 and the side plate 230 as described above.

In the battery module according to the present disclosure, the module case 200 may be configured to have different expansibility with respect to at least some of various components such as the top plate 210, the base plate 220, and the side plate 230. In particular, the top plate 210 may be configured to at least partially have high expansibility compared to other components, namely the base plate 220 and/or the side plate 230. Moreover, the top plate 210 may be configured to include a material with a high expansion rate compared to other components of the module case 200. For example, the base plate 220 and the side plate 230 may be made of an aluminum material, and the top plate 210 may be made of a material with better expansibility than the aluminum material, for example a material such as zinc. As another example, the base plate 220 and the side plate 230 may be made of an iron material, and the top plate 210 may be made of a material with better expansibility than the iron material, for example a material such as aluminum. Here, good expansibility of the top plate 210 may mean that the volume of the top plate 210 itself is expanded, or may also mean that the volume of the space located below the top plate 210 is expanded due to deformation or stretching of the top plate 210.

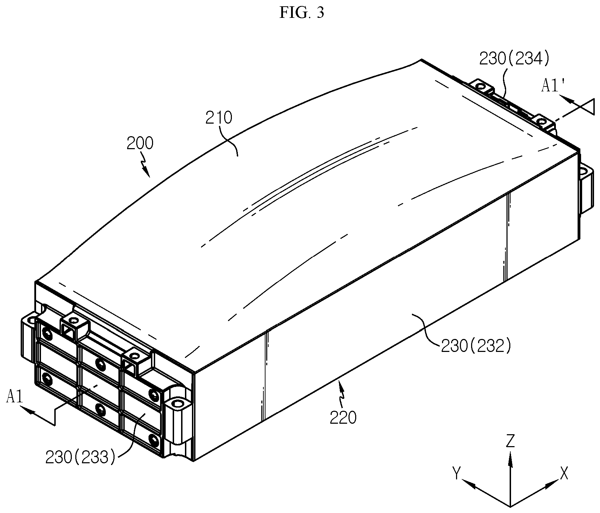

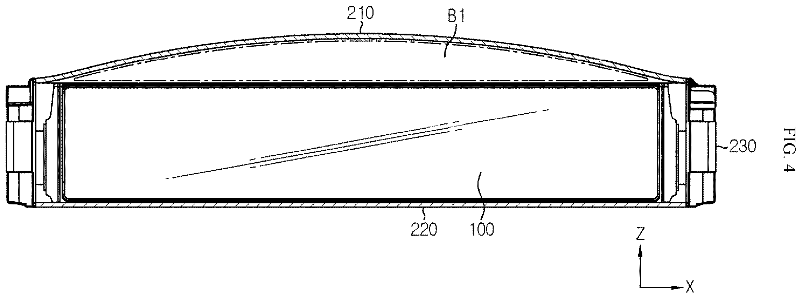

According to this embodiment of the present disclosure, when gas and/or heat is generated inside the battery module due to thermal runaway or the like, a portion with high expansibility, particularly the top plate 210, may expand. In addition, since gas and/or heat may be accumulated in the inner space of the module case 200 whose volume is increased by the expansion, it may act as a buffer for gas and/or heat. This will be described in more detail with reference to FIGS. 3 and 4 further.

FIGS. 3 and 4 are a perspective view and a cross-sectional view schematically showing that the top plate 210 is expanded in the battery module according to an embodiment of the present disclosure. In particular, it may be regarded that FIG. 4 shows a cross-sectional shape, taken along line A1-A1' of FIG. 3.

Referring to FIGS. 3 and 4, when gas and/or heat is generated and discharged from the cell assembly 100, since the top plate 210 is configured to expand well compared to other parts in the module case 200, the top plate 210 may be inflated first. In particular, the top plate 210 may be curved upward due to the expansion by gas and/or heat. That is, the top plate 210 may be configured to be bent upward when the internal pressure and/or internal temperature of the module case 200 increases, while maintaining a flat state in a normal state. In addition, as the top plate 210 is curved, an expanded empty space may be formed inside the top plate 210, as indicated by B1 in FIG. 4. In addition, in the empty space B1 formed as described above, the gas and/or heat discharged from the cell assembly 100 may be accumulated.

In this case, the safety of the battery module may be further improved. For example, when gas is discharged from the cell assembly 100, the internal pressure of the battery module may increase, and the gas may accumulate in the inner space B1 additionally provided due to the expansion of the top plate 210. Accordingly, the increase in internal pressure due to gas discharge may be alleviated, and the possibility of an explosion of the module due to gas may be reduced.

In particular, the module case 200 may be formed such that the inner space is completely sealed. At this time, if the internal pressure of the battery module increases, the risk of explosion may be greater. However, according to this embodiment, the increase in internal pressure may be alleviated by the expansion of the inner space due to the deformation of the top plate 210. Therefore, the risk of explosion may be lowered.

Moreover, the module case 200 may be configured such that the inner space is not completely sealed. For example, the front plate 233 and/or the rear plate 234 may be provided with a module terminal or a communication connector for connection with other external components. At this time, the gas or heat generated inside the module case 200 may be discharged to the outside of the module case 200 through a gap existing in the module terminal or the communication connector itself or its periphery. However, when the gas or heat is discharged at an excessively high speed or amount through the gap, other battery modules, other devices nearby, and the driver or occupants may be damaged. In addition, if gas or heat is generated at an amount or rate that exceeds the level that can be discharged through the corresponding gap, the possibility of explosion or fire of the battery module may still exist. However, according to this embodiment of the present disclosure, the expanded space provided at the inside of the top plate 210 serves as a buffer, so that it is possible to significantly reduce the possibility of explosion.

In addition, the gas discharged from the cell assembly 100 may be relatively high temperature, and, according to this embodiment, since the volume expansion occurs in the space where the gas is located, the temperature of the gas may be lowered. Accordingly, it is possible to reduce the problem that heat is transferred from the battery module in which a thermal event has occurred to other battery modules or other devices nearby. Moreover, in the case where the battery module is included in a battery pack for a vehicle, a person such as a driver or occupant may exist around the battery module, such as above the battery module. However, according to this embodiment, it is possible to prevent or reduce heat transfer toward the driver or occupant.

Moreover, when a thermal event occurs in the cell assembly 100, a flame may be generated along with the gas. However, according to this embodiment, since the flame may also be accumulated in the inner space formed due to the expansion of the top plate 210, the external emission of the flame may be prevented or delayed. Accordingly, the battery pack for a vehicle may ensure the escape time of the driver or occupant to a certain level or above. Therefore, even in this aspect, it may be regarded that the safety of the battery module is further improved.

The top plate 210 may have a different elastic modulus or different thermal expansion coefficient from other portions of the module case 200 in order to have higher expansibility than other portions of the module case 200.

In particular, the top plate 210 may be configured to at least partially have a lower elastic modulus compared to the base plate 220 and/or side plate 230. That is, the top plate 210 may be formed of a material or shape that deforms better than the base plate 220 or the side plate 230, even the same force is applied. For example, when the base plate 220 and the side plate 230 are made of a material such as titanium or SUS (Stainless Steel), the top plate 210 may be made of a material with a lower elastic modulus, for example a material such as aluminum.

In this case, when gas is generated from the cell assembly 100 to increase the pressure inside the module case 200, even if the base plate 220 or the side plate 230 is not deformed, the top plate 210 may be deformed to be curved upward as shown in FIGS. 3 and 4. In addition, as described above, the gas may be accumulated in the inner space formed due to the deformation of the top plate 210. Accordingly, a problem caused by a large and rapid increase in pressure inside the module case 200, for example explosion of the battery module, may be prevented.

Also, the top plate 210 may be configured to at least partially have a higher thermal expansion coefficient compared to the base plate 220 and/or side plate 230. For example, when the base plate 220 and the side plate 230 are made of a SUS (Stainless Steel) material, the top plate 210 may be made of an aluminum material, an aluminum-zinc alloy material, or a zinc material having a higher thermal expansion coefficient.

In this case, when heat is generated or a high-temperature gas is generated and discharged from the cell assembly 100, the top plate 210 may be deformed to be curved upward as shown in FIGS. 3 and 4 by the heat. In addition, since the volume of the inner space B1 of the top plate 210 is expanded due to this deformation, the temperature of the heat may be lowered. Accordingly, it is possible to prevent a problem that may occur due to a rapid increase in heat inside the module case 200, such as thermal runaway propagation or fire.

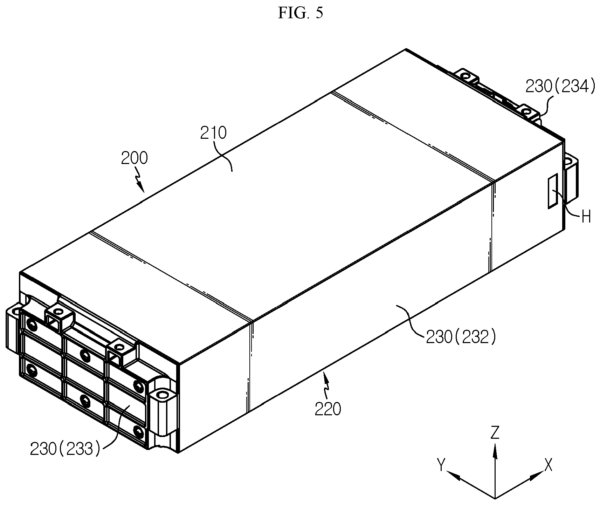

FIG. 5 is a perspective view schematically showing a battery module according to another embodiment of the present disclosure. For this embodiment and other several embodiments below, any feature identical or similar to that of the former embodiment will not be described in detail, and a feature different therefrom will be described in detail.

Referring to FIG. 5, a venting hole is formed in the module case 200, as indicated by H. For example, the venting hole H may be formed in the left plate 231 and the right plate 232 of the module case 200, respectively. The venting hole H is configured to penetrate the inner space and outer space of the module case 200. In this case, it may be regarded that the module case 200 is configured such that the inner space is not sealed.

In this configuration, when the venting gas is generated and ejected from the cell assembly 100 accommodated in the inner space of the module case 200, the generated venting gas may be discharged to the outside through the venting hole H. However, when gas is discharged from the venting hole H at high pressure or speed, high heat or pressure may be applied to other surrounding components, such as other battery modules, pack housings, and BMS (Battery Management System) by the discharged gas. In addition, the applied heat or pressure may cause thermal runaway propagation, damage to surrounding components, or fire. Moreover, if the gas ejection rate of the cell assembly 100 is greater than the level that the venting hole H can discharge, an explosion or fire of the corresponding battery module may occur. However, according to this embodiment of the present disclosure, since the inner space of the top plate 210 is expanded by gas and/or heat to serve as a buffer, it is possible to reduce the risk of such an explosion or fire. Moreover, according to this embodiment, since the gas discharge rate per hour may be lowered, the temperature of the portion where the gas is discharged may be lowered. In addition, according to this embodiment, it is possible to delay the discharge of the high-temperature gas or flame through the venting hole H, so that the time for the driver or the like to escape may be additionally secured.

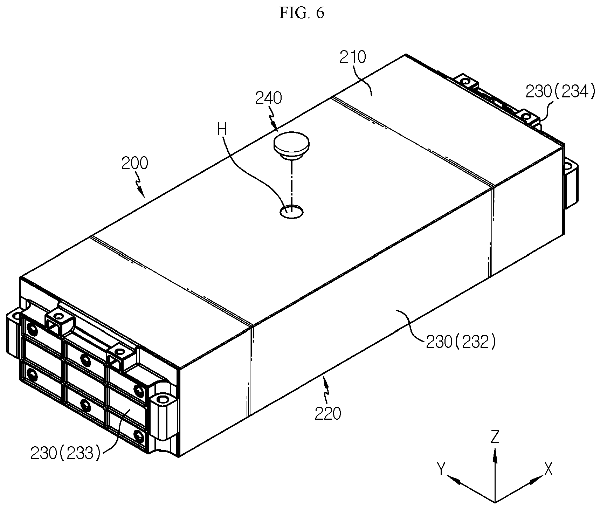

FIG. 6 is a perspective view schematically showing a battery module according to still another embodiment of the present disclosure.

Referring to FIG. 6, the module case 200 may further include a module valve 240. Here, the module valve 240 may be mounted in the venting hole H of the module case 200. In particular, the module valve 240 may seal the inner space of the module case 200 in a state of being mounted in the venting hole H. In addition, the module valve 240 may be configured to open when the temperature or pressure of the inner space of the module case 200 is in a certain level or above.

In particular, the venting hole H may be formed in the top plate 210. In addition, the module valve 240 may be configured to be inserted into the venting hole H of the top plate 210. Therefore, in a normal state, the module valve 240 may close the venting hole H, so that the inner space of the module case 200 is sealed. However, when a certain level of gas, heat, or flame is generated from the cell assembly 100 and ejected into the module case 200, the module valve 240 may open the venting hole H without blocking any more.

At this time, the module valve 240 may open the venting hole H in various ways when heat or gas is generated. For example, the module valve 240 may open the venting hole H may be melted or deformed at a temperature of a certain level or above to open the venting hole H. Alternatively, the module valve 240 may be separated from the venting hole H to open the venting hole H when the pressure inside the module case 200 is in a certain level or above. The module valve 240 may be made of various materials such as plastic, aluminum, and/or SUS according to the opening method of the venting hole H or the specification of the cell assembly 100.

According to this embodiment of the present disclosure, the safety of the battery module may be further improved. That is, when gas, flame, or heat is generated from the cell assembly 100, since the venting hole H is closed by the module valve 240 at an initial stage, the inner space may be surely expanded due to the inflation (deformation) of the top plate 210. **In** addition, the gas, flame, heat, or the like at the initial stage may be accumulated in the expanded inner space, and its external discharge may be delayed. Accordingly, time for action, such as time for the driver to escape, may be secured at the initial stage of the thermal event.

Moreover, as in the embodiment of FIG. 6, when the venting hole H is formed in the top plate 210 and the module valve 240 is provided in the venting hole H, gas, heat, flame, or the like may be discharged more stably. In particular, the gas, flame, and heat present inside the module case 200 may be mostly accumulated in the space increased due to the expansion of the top plate 210. After a predetermined time passes, if the venting hole H is opened due to the deviation or deformation of the module valve 240, the gas, flame, heat, or the like may be discharged to the outside through the venting hole H of the top plate 210. Therefore, it is possible to minimize the influence of heat or gas energy accumulated in the inner space on other normal cells in the module case 200 or other components such as bus bars. Therefore, in this case, it is possible to more effectively prevent heat propagation between cells or damage to components.

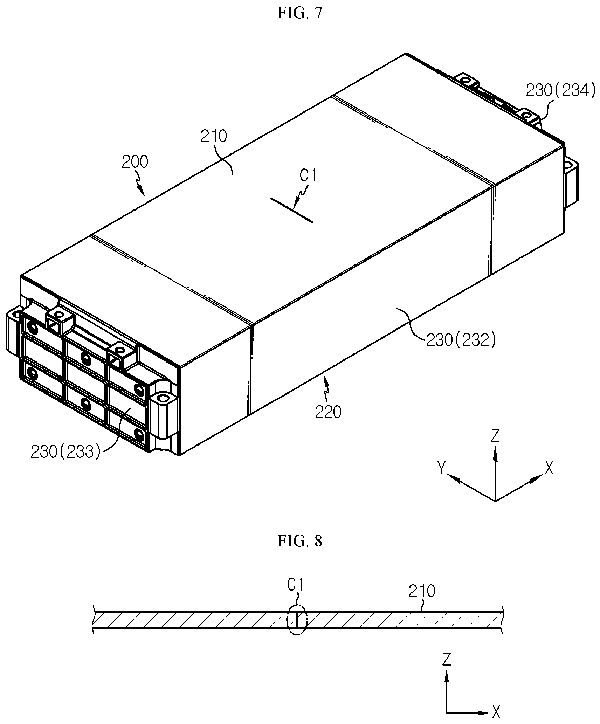

The venting hole is configured to be opened by deformation (inflation) of the top plate 210. This will be described in more detail with reference to FIGS. 7 to 9.

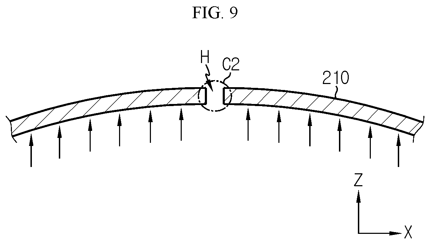

FIG. 7 is a perspective view schematically showing a battery module according to still another embodiment of the present disclosure. Also, FIG. 8 is a cross-sectional view showing the C1 portion of the top plate 210 in FIG. 7, and FIG. 9 is a cross-sectional view schematically showing the deformed state of the top plate 210 of FIG. 8.

Referring to FIGS. 7 and 8, at least a portion of the top plate 210 may be formed in a cut form like the portion indicated by C1. Moreover, the cut portion of the top plate 210 may be configured in a closed form in a normal state, namely in a state where there is no deformation by heat or gas. In addition, even if the top plate 210 is slightly deformed, the cut portion may be continuously closed when the degree of deformation does not reach a certain level. Therefore, when gas or heat is generated from the cell assembly 100, as shown in FIG. 9, the top plate 210 may be expanded and deformed to be curved upward.

In addition, when the degree of deformation of the top plate 210 exceeds a certain level, the cut portion may be widened, as indicated by the portion C2 of FIG. 9. In addition, due to the widening of the cut portion, a venting hole H may be formed, so that the gas or heat accumulated in the lower portion of the top plate 210 may be discharged to the outside.

According to this configuration of the present disclosure, even if there is no component such as the module valve 240, when the heat or pressure accumulated inside the module case 200 reaches a certain level or above, the heat or pressure is discharged to the outside, thereby preventing or reducing the risk of explosion or fire of the battery module, heat propagation between cells or modules, and the like.

Moreover, as in this embodiment, the cut portion, which is opened to serve as a venting hole when the top plate 210 is deformed, may be located on the top plate 210. In this case, as described in the former embodiment of the module valve 240, when gas or heat is discharged, the venting direction may be controlled, and the influence on other battery cells or components may be reduced.

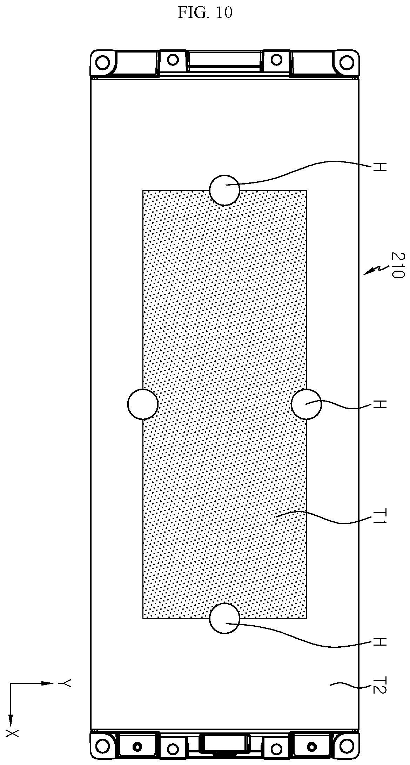

FIG. 10 is a top view schematically showing a top plate 210 included in the battery module according to still another embodiment of the present disclosure.

Referring to FIG. 10, the top plate 210 may be configured to partially have different expansibility (strain). In particular, the top plate 210 may be configured such that materials with different expansibility exist at different positions. For example, in the top plate 210, the portion indicated by T1 and the portion indicated by T2 in FIG. 10 may be made of different materials. In this case, the portions having different expansibility may be coupled in various ways, such as welding, bolting or bonding.

According to this embodiment of the present disclosure, if the pressure or temperature inside the module case 200 increases, when the top plate 210 is expanded and deformed upward, the position and shape of the expansion and deformation may be more specifically controlled. For example, depending on the location or shape of an empty space that allows expansion at the upper portion of the battery module, or depending on the arrangement of components that may properly discharge heat accumulated under the top plate 210, such as a cooling device, or depending on the location where other battery modules are placed, the top plate 210 may be expanded and deformed in an appropriate shape.

In particular, the top plate 210 may be configured such that the center portion has a higher expansibility than the rim portion. For example, as shown in FIG. 10, in the top plate 210, the center portion indicated by T1 and the rim portion indicated by T2 may be made of different materials, where the center portion may be made of a material with better expansibility than the rim portion. That is, in the top plate 210, the center portion indicated by T1 may be a high expansion portion that expands relatively large, and the rim portion indicated by T2 may be a low expansion portion that expands relatively small.

However, the rim portion may be made of a material having poor expansibility than the center portion and good other characteristics. In particular, the top plate 210 may be welded to the side plate 230, and the portion of the top plate 210 welded to the side plate 230 may be referred to as a rim portion. Therefore, the rim portion may be made of a material having good weldability rather than expansibility. For example, in the top plate 210, the high expansion portion indicated by T1 may be made of a zinc material having good expansibility, and the low expansion portion indicated by T2 may be made of an aluminum material having good weldability. Moreover, the low expansion portion T2 of the top plate 210 may be made of the same material as the side plate 230. For example, when the side plate 230 of the module case 200 is made of iron or aluminum material, the low expansion portion T2 of the top plate 210 may also be made of iron or aluminum material in the same way.

According to this embodiment of the present disclosure, the top plate 210 may be configured to have both expansibility and weldability. That is, the high expansion portion T1 located in the center portion of the top plate 210 may be deformed upward to secure the inner space when internal pressure or temperature increases, and the low expansion portion T2 located in the rim portion of the top plate 210 may not be deformed greatly even when internal pressure or temperature increases, and may stably maintain the welding condition while securing excellent weldability with the top end of the side plate 230.

Here, as shown in FIG. 10, a venting hole H may be formed in the top plate 210 around the high expansion portion T1. As described in other embodiments, the venting hole H may be configured to penetrate the inside and outside of the module case 200 and serve to discharge the internal gas to the outside. Moreover, the venting hole H may be formed in the boundary portion between the center portion and the rim portion. In addition, a plurality of venting holes H may be formed around the high expansion portion T1 of the top plate 210.

According to this configuration of the present disclosure, since the venting holes H are formed along the outer line of the portion of the top plate 210 where the expansion occurs greatly, when the gas and/or heat accommodated in the inner space of the center portion of the top plate 210 is discharged to the outside through the venting hole H, it is possible to prevent the gas and/or heat from applying physical force or heat to other battery cells, bus bars, and connection components of electrode leads. Meanwhile, although not shown in FIG. 10, as described above in the embodiment of FIG. 6, the top plate 210 may further include a module valve 240 for opening and closing each venting hole H.

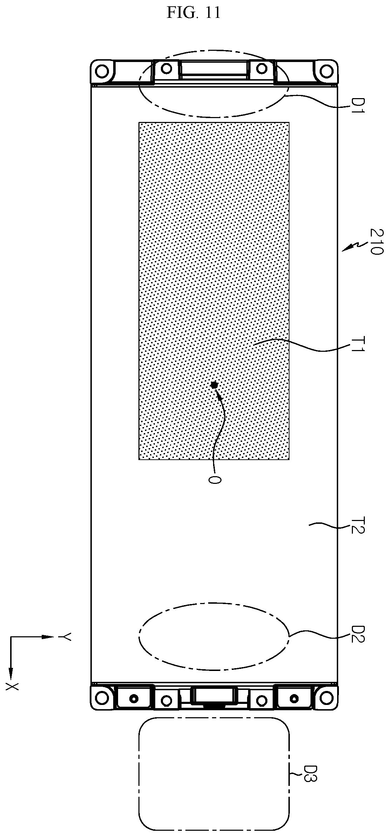

The top plate 210 may be configured to have expansibility asymmetrically. This will be described in more detail with reference to FIG. 11.

FIG. 11 is a top view schematically showing a top plate 210 included in the battery module according to still another embodiment of the present disclosure.

Referring to FIG. 11, the top plate 210 includes a high expansion portion T1 and a low expansion portion T2, and the high expansion portion T1 may be formed in an asymmetrical shape and/or position. In particular, the high expansion portion T1 may be configured to be tilted in a specific direction, rather than being located precisely in the center of the top plate 210. For example, when the center point of the top plate 210 is a portion marked with O, the high expansion portion T1 may be provided at a position biased in the - X-axis direction with respect to the center point.

According to this configuration of the present disclosure, the processes such as expansion of the top plate 210 or accumulation or discharge of gas and heat may be performed effectively or stably. In particular, these processes may be stably performed according to the shape and arrangement of other components included inside or outside the battery module, such as battery cells, venting holes, and other battery modules.

For example, when the venting hole H is formed in the portion indicated by D1 in FIG. 11, the high expansion portion T1 may be located in the portion of the top plate 210 that is biased closer to the venting hole H. As another example, when a coupled portion of an electrode lead between battery cells, a bus bar, a control component, or the like is located in the portion indicated by D2 in FIG. 11, the high expansion portion T1 may be located relatively far from the portion D2. Therefore, when gas or heat is accumulated and discharged, it is possible to prevent these components from being damaged by the gas or heat. As another example, when another battery module or a control device such as a BMS is located in the portion indicated by D3 in FIG. 11, the high expansion portion T1 may be located relatively far from the portion D3. Therefore, when gas or heat is accumulated and discharged, it is possible to prevent heat propagation to another battery module or control device by the gas or heat.

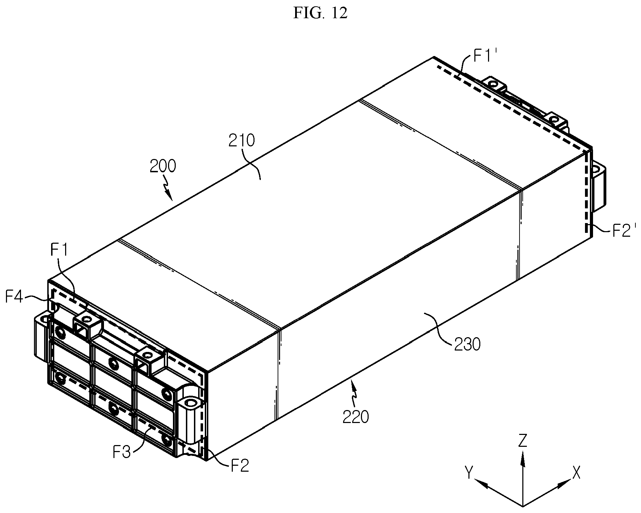

FIG. 12 is a perspective view showing a coupled portion in a module case 200 of the battery module according to an embodiment of the present disclosure.

Referring to FIG. 12, the module case 200 includes a top plate 210, a base plate 220 and a side plate 230, and these components may be coupled to each other to seal the inner space. In particular, the ends of the top plate 210 and the side plate 230, and/or the ends of the side plate 230 and the base plate 220, may be coupled to each other, as indicated by F1 to F4 and F1' to F2'. For example, the top plate 210 and the side plate 230, and/or the side plate 230 and the base plate 220, may be connected to each other by welding.

In the configuration in which the inside of the module case 200 is sealed, when gas or flame occurs inside the cell assembly 100, the inner space may be additionally secured by the expansion of the top plate 210 to a certain level, thereby preventing the gas or flame from being discharged to the outside. However, when the internal pressure of the module case 200 exceeds a certain level, at least a part of the coupled portion between the top plate 210 and the side plate 230 and/or between the side plate 230 and the base plate 220 may be destroyed. For example, in FIG. 12, when the portions indicated by F1 to F4 and F1' to F2' are welded, at least a part of these welded portions may be damaged, and the gas or flame may be discharged to the outside through the damaged part.

Furthermore, in the above configuration, various coupled portions between the top plate 210 and the side plate 230 and/or between the side plate 230 and the base plate 220 may be configured to have different coupling forces (welding forces). For example, in FIG. 12, the module case 200 may be configured such that welding of the portion indicated by F3 is intentionally weaker than other portions, among the portions indicated by F1 to F4 and F1' to F2'. In this case, when the pressure inside the module case 200 rises above a certain level, the portion indicated by F3 may be damaged first. Therefore, since the gas, flame, heat, or the like may be discharged through the corresponding portion, it is possible to control the discharging direction.

A battery pack according to the present disclosure may include one or more battery modules according to the present disclosure described above. In addition, the battery pack according to the present disclosure may further include various components other than these battery modules, for example components of the battery pack known at the time of filing of this application, such as a BMS or a bus bar, a pack case, a relay, and a current sensor.

The battery module according to the present disclosure may be applied to a vehicle such as an electric vehicle or a hybrid electric vehicle. That is, the vehicle according to the present disclosure may include the battery module according to the present disclosure or the battery pack according to the present disclosure. In addition, the vehicle according to the present disclosure may further include various other components included in a vehicle in addition to the battery module or the battery pack. For example, the vehicle according to the present disclosure may further include a vehicle body, a motor, a control device such as an electronic control unit (ECU), and the like in addition to the battery module according to the present disclosure.

Meanwhile, in this specification, terms indicating directions such as "up", "down", "left", "right", "front" and "rear" used, but these terms are merely for convenience of description and may vary depending on the location of an object or the location of an observer, as apparent to those skilled in the art.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the scope of the appended claims.

### Reference Signs

100: cell assembly
200: module case
210: top plate, 220: base plate, 230: side plate
231: left plate, 232: right plate, 233: front plate, 234: rear plate
240: module valve

## Claims

1. A battery module, comprising:
a cell assembly (100) having at least one battery cell; and
a module case (200) configured to have a top plate (210), a base plate (220) and a side plate (230) to define an inner space and to accommodate the cell assembly (100) in the inner space, the top plate (210) being configured to at least partially have high expansibility compared to at least one of the base plate (220) and the side plate (230),
wherein the top plate (210) is configured to be expanded and be deformed into a shape bent upwards, when gas or heat is generated from the cell assembly (100), whereas the base plate (220) or the side plate (230) is not deformed,
wherein the module case (200) has a venting hole (H) formed to penetrate from the inner space to the outer space, and
wherein the venting hole (H) is configured to be opened by deformation of the top plate (210).

2. The battery module according to claim 1,
wherein the top plate (210) at least partially has a low elastic modulus or a high thermal expansion coefficient compared to at least one of the base plate (220) and the side plate (230).

3. The battery module according to claim 1,
wherein the module case (200) further includes a module valve (240) provided in the venting hole (H) and configured to be opened only when a temperature or pressure of the inner space is in a certain level or above.

4. The battery module according to claim 1,
wherein the top plate (210) is configured to partially have different expansibility.

5. The battery module according to claim 4,
wherein the top plate (210) is configured such that a center portion has higher expansibility than a rim portion.

6. The battery module according to claim 4,
wherein the top plate (210) is configured to have expansibility asymmetrically.

7. A battery pack, comprising the battery module according to any one of claims 1 to 6.

8. A vehicle, comprising the battery module according to any one of claims 1 to 6.

## Patentansprüche

1. Batteriemodul, umfassend:
eine Zellenanordnung (100) mit mindestens einer Batteriezelle; und
ein Modulgehäuse (200), das so konfiguriert ist, dass es eine obere Platte (210), eine Basisplatte (220) und eine Seitenplatte (230) aufweist, um einen Innenraum zu definieren und die Zellenanordnung (100) in dem Innenraum aufzunehmen, wobei die obere Platte (210) so konfiguriert ist, dass sie im Vergleich zu mindestens einer der Basisplatte (220) und der Seitenplatte (230) mindestens teilweise eine hohe Dehnbarkeit aufweist,
wobei die obere Platte (210) so konfiguriert ist, dass sie gedehnt und in eine nach oben gebogene Form verformt wird, wenn Gas oder Wärme von der Zellenanordnung (100) erzeugt wird, während die Basisplatte (220) oder die Seitenplatte (230) nicht verformt wird,
wobei das Modulgehäuse (200) ein Entlüftungsloch (H) aufweist, das so ausgebildet ist, dass es von dem Innenraum in den Außenraum eindringt, und
wobei das Entlüftungsloch (H) so konfiguriert ist, dass es durch Verformung der oberen Platte (210) geöffnet wird.

2. Batteriemodul nach Anspruch 1,
wobei die obere Platte (210) im Vergleich zu mindestens einer der Basisplatte (220) und der Seitenplatte (230) mindestens teilweise einen niedrigen Elastizitätsmodul oder einen hohen Wärmeausdehnungskoeffizienten aufweist.

3. Batteriemodul nach Anspruch 1,
wobei das Modulgehäuse (200) ferner ein Modulventil (240) umfasst, das in dem Entlüftungsloch (H) vorgesehen und so konfiguriert ist, dass es nur geöffnet wird, wenn eine Temperatur oder ein Druck des Innenraums auf einem bestimmten Niveau oder darüber liegt.

4. Batteriemodul nach Anspruch 1,
wobei die obere Platte (210) so konfiguriert ist, dass sie teilweise eine andere Dehnbarkeit aufweist.

5. Batteriemodul nach Anspruch 4,
wobei die obere Platte (210) so konfiguriert ist, dass ein Mittelabschnitt eine höhere Dehnbarkeit als ein Randabschnitt aufweist.

6. Batteriemodul nach Anspruch 4,
wobei die obere Platte (210) so konfiguriert ist, dass sie eine asymmetrische Dehnbarkeit aufweist.

7. Batteriepack aufweisend das Batteriemodul nach einem der Ansprüche 1 bis 6.

8. Fahrzeug aufweisend das Batteriemodul nach einem der Ansprüche 1 bis 6.

## Revendications

1. Module de batterie, comprenant :
un ensemble d'éléments (100) ayant au moins un élément de batterie ; et
un boîtier de module (200) configuré pour avoir une plaque supérieure (210), une plaque de base (220) et une plaque latérale (230) pour définir un espace intérieur et pour abriter l'ensemble d'éléments (100) dans l'espace intérieur, la plaque supérieure (210) étant configurée pour avoir au moins partiellement une expansibilité plus élevée, comparé à au moins soit la plaque de base (220), soit la plaque latérale (230),
dans lequel la plaque supérieure (210) est configurée pour être expansée et être déformée dans une forme repliée vers le haut, quand un gaz ou de la chaleur est généré par l'ensemble d'éléments (100), et donc la plaque de base (220) ou la plaque latérale (230) n'est pas déformée,
dans lequel le boîtier de module (200) a un trou d'évacuation (H) formé pour pénétrer de l'espace intérieur à l'espace extérieur, et
dans lequel le trou d'évacuation (H) est configuré pour être ouvert par déformation de la plaque supérieure (210).

2. Module de batterie selon la revendication 1,
dans lequel la plaque supérieure (210) a au moins partiellement un faible module d'élasticité ou un coefficient d'expansion thermique élevé, comparé à au moins soit la plaque de base (220), soit la plaque latérale (230).

3. Module de batterie selon la revendication 1,
dans lequel le boîtier de module (200) inclut en outre une vanne de module (240) fournie dans le trou d'évacuation (H) et configurée pour être ouverte uniquement quand une température ou pression de l'espace intérieur est à un certain niveau ou au-dessus.

4. Module de batterie selon la revendication 1,
dans lequel la plaque supérieure (210) est configurée pour avoir partiellement une expansibilité différente.

5. Module de batterie selon la revendication 4,
dans lequel la plaque supérieure (210) est configurée de telle sorte qu'une partie centrale a une expansibilité plus élevée qu'une partie de rebord.

6. Module de batterie selon la revendication 4,
dans lequel la plaque supérieure (210) est configurée pour avoir une expansibilité asymétrique.

7. Bloc-batterie, comprenant le module de batterie selon l'une quelconque des revendications 1 à 6.

8. Véhicule, comprenant le module de batterie selon l'une quelconque des revendications 1 à 6.
